Europäisches Patentamt

European Patent Office

Office européen des brevets

(11) Veröffentlichungsnummer: **0 049 447**
**B1**

(12) **EUROPÄISCHE PATENTSCHRIFT**

(45) Veröffentlichungstag der Patentschrift: 07.08.85

(21) Anmeldenummer: 81107677.7

(22) Anmeldetag: 26.09.81

(51) Int. Cl.⁴: $C\ 04\ B\ 35/56,\ C\ 04\ B\ 37/00$

(54) Verfahren zum Herstellen von Formkörpern aus Siliziumkarbid oder Formkörpern aus Graphit oder graphitähnlichem Werkstoff mit einer aus Siliziumkarbid bestehenden Oberfläche.

(30) Priorität: 02.10.80 DE 3037199

(43) Veröffentlichungstag der Anmeldung:
14.04.82 Patentblatt 82/15

(45) Bekanntmachung des Hinweises auf die Patenterteilung:
07.08.85 Patentblatt 85/32

(84) Benannte Vertragsstaaten:
BE CH FR GB IT LI NL

(56) Entgegenhaltungen:
EP-A-0 011 841
DE-A-1 671 092
DE-A-2 834 315
DE-B-2 360 982
FR-A-1 249 409
FR-A-2 068 160
GB-A- 828 211
GB-A- 841 716

(73) Patentinhaber: Kernforschungsanlage Jülich
Gesellschaft mit beschränkter Haftung
Postfach 1913
D-5170 Jülich (DE)

(72) Erfinder: Luhleich, Hartmut, Dr.
Chlodwigplatz 15
D-5160 Düren (DE)
Erfinder: Dias, Francisco Joachim
An der Lünette 3
D-5170 Jülich (DE)
Erfinder: Gupta, Ashok Kumar
Artilleriestrasse 49
D-5170 Jülich (DE)
Erfinder: Gyarmati, Ernö, Dr.
Lorsbeckerstrasse 54
D-5170 Jülich (DE)
Erfinder: Kampel, Marian
Belderweg 9
D-5138 Heinsberg-Oberbruch (DE)
Erfinder: Münzer, Rudolf
Tilsiter Strasse 7
D-5110 Alsdorf (DE)
Erfinder: Naoumidis, Aristides, Dr.
Kreisbahnstrasse 30
D-5170 Jülich (DE)

## Beschreibung

Die Erfindung bezieht sich auf ein Verfahren zum Herstellen von Formkörpern aus Siliziumkarbid oder von Formkörpern aus Graphit oder graphitähnlichem Werkstoff mit einer aus Siliziumkarbid bestehenden Oberfläche durch Verbinden vorgefertigter Formkörperteile mittels einer zwischen den miteinander zu verbindenden Formkörperteilen gebildeten Siliziumkarbidschicht durch Eindringen geschmolzenen Siliziums in den Werkstoff der Formkörperteile.

Siliziumkarbid oder mit einer Siliziumkarbidschicht überzogener Graphit wird als Werkstoff für Anlagen- oder Maschinenteile verwendet, die hohen Betriebstemperaturen ausgesetzt sind, für die Metalle nicht mehr geeignet sind. Auch widersteht Siliziumkarbid bei höheren Temperaturen den Angriffen von Chlor, Schwefel, Sauerstoff und starken Säuren. Bauteile aus Siliziumkarbid werden daher bevorzugt auch im chemischen Apparatebau eingesetzt.

Es ist bekannt, Werkstücke aus Siliziumkarbid im Heißpressverfahren herzustellen, wobei die Sinterfähigkeit von Siliziumkarbid unter Druckausgenutzt wird. Zur Herstellung von Formkörpern wird in Formen eingefülltes Siliziumkarbidpulver unter Druck im Temperaturbereich zwischen 1800 und 2000°C gesintert. Aus GB—A 866,813 and US—A 3,275,722 ist es bekannt, Siliziumkarbid enthaltende Pulver mit Bindemitteln zu vermischen, zu trocknen und nach erneuter Pulverisierung als sogenanntes Presspulver unter Druck zu Grünkörpern zu verformen, die zur Beseitigung des Binders thermisch noch nachbehandelt werden. Die Grünkörper werden bei einer Temperatur von 2000°C im Vakuum oder bei einer Temperatur zwischen 1500 und 1700°C in Silizium enthaltender Atmosphäre siliziert. Nachteilig ist, daß sich nach diesem Verfahren nur verhältnismäßig einfach geformte Werkstücke herstellen lassen und ein Nacharbeiten der Werkstücke wegen der hohen Härte von Siliziumkarbid zeitraubend und mit erheblichem Aufwand verbunden ist.

Komplizierte Formkörper, beispielsweise keramische Wärmetauscher, Gasturbinenteile oder Schmelztiegel werden aus mehreren Teilstücken gefertigt, wobei zur Verbindung der Teilstücke beispielsweise keramische Massen, sogenannte Schlicker verwendet werden und die zusammengefügten Teilstücke in dafür geeigneten Brennöfen nachzubrennen sind, vergleiche DE—B— 1,796,279. Die Qualität der Schlicker unterscheidet sich jedoch von den Eigenschaften der Grundwerkstoffe der Formkörper, was die Beanspruchbarkeit der nachgebrannten Formkörper beeinflußt.

Bekannt ist es auch, Kohlenstoffkörper miteinander durch Eintauchen in eine Siliziumschmelze (GB—A—841,716) oder durch Aufstreuen von Siliziumpulver auf die Verbindungsnaht und nachfolgendes Aufschmelzen des Pulvers (FR—A— 1 249 409) zu verbinden. Dabie entsteht an der Verbindungsstelle eine Silizium enthaltende Naht. Eine Ausbildung von Siliziumkarbidkörpern ist jedoch nicht vorgesehen.

Zur Herstellung von Siliziumkarbidkörpern oder zur Herstellung von Überzügen aus Siliziumkarbid aus graphitischen oder graphitähnlichen Werkstoffen ist in GB—A—713,710 ein Verfahren beschrieben, bei dem die Karbidschicht durch Ausdampfen von Silizium in inerter Atmosphäre oder durch Eintauchen des Graphitkörpers in eine Siliziumschmelze gebildet wird. In EP—A—11 841 ist ein Verfahren angegeben, bei dem durch Auftragen von zu schmelzendem Siliziumpulver Vorkörper aus Kohlenstoff siliziert werden. Das Eintauchen von Formkörpern aus Graphit in eine Metallschmelze zur Bildung einer Schutzschicht aus Metallkarbid ist auch aus der US—A 2,929,714 bekannt. Auf diese Weise gebildete Formkörperteile lassen sich in gleicher Weise, wie durch Sintern hergestellte Werkstücke, wegen ihrer harten Oberfläche nur schwierig nacharbeiten. Zur Verbindung solcher Formkörperteile miteinander werden dann Schlicker unter Inkaufnahme der damit verbundenen Nachteile verwendet.

Aufgabe der Erfindung ist es, Formkörper aus Siliziumkarbid oder Formkörper aus Graphit oder graphitähnlichem Werkstoff, die mit einer Siliziumkarbidschicht überzogen sind, aus einfach bearbeitbaren, vorzufertigenden Kohlenstoffkörpern durch Eintauchen in eine Siliziumschmelze in der Weise herzustellen, daß die aneinander zu fügenden Verbindungsstellen unter Ausbildung von Siliziumkarbid miteinander homogen verwachsen.

Diese Aufgabe wird gemäß Erfindung beim Verfahren der oben angegebenen Art durch die im Abspruch 1 angegebenen Maßnahmen gelöst. Es hat sich gezeigt, daß das Eindrigen der Siliziumschmelze in die Formkörperteil aus Graphit oder graphitähnlichem Werkstoff vor allem von deren Dichte und offenen Porosität abhängig ist. Darüberhinaus ist die Durchlässigkeit für Gas eine charakteristische Größe für die Auswahl geeigneter graphitischer Werkstoffe für die Durchführung des Verfahrens. Für die Ermittlung der Gaspermeabilität wird ein aus dem zu prüfenden Werkstoff bestehender Zylinder von 1 cm$^2$ Querschnitt und 1 cm Länge verwendet, der bei einer Druckdifferenz von 1 cm Wassersäule über seiner Länge von Luft durchströmt wird. Der Luftdurchsatz pro Minute ist dann ein Maß für die Gasdurchlässigkeit. Es werden Formkörperteile aus Graphit oder graphitähnlichem Werkstoff mit einer Dichte zwischen 0,6 bis 1,3 g/cm$^3$, einer offenen Porosität von 30% bis 70% sowie einer Gaspermeabilität verwendet, deren Größe vom Durchtritt einer Luftmenge von 1 bis 8 cm$^3$/min durch den vorbeschriebenen Zylinder aus dem Graphit oder graphitähnlichem Werkstoff bei einer Druckdifferenz von 1 cm Wassersäule bestimmt ist. Die Bearbeitung dieses Kohlenstoffmaterials bereitet keine Schwierigkeiten. Die vorbereiteten Formkörperteile werden zum Auszubildenden Formkörper zusammengefügt. Dies geschieht beispielsweise mittels Paßstiften, Keilen oder durch Anbrigen von Nut und Feder an den Formkörperteilen, durch Verschrauben oder Verwendung anderer bekannter Befestigungsmittel. Die auf diese Weise miteinander verbundenen Formkörperteile werden sodann in eine Siliziumschmelze getaucht. Das flüssige Silizium dringt in die Fugen zwischen den Formkörperteilen und in die offenen Poren des Graphits oder graphitähnlichen Werkstoffs auf der Oberfläche der Formkörperteile ein und reagiert dabei mit dem Grundwerkstoff unter Bildung von Siliziumkarbid. Der Metallschmelze entnommene und in inerter Atmosphäre abgekühlte Formkörper weisen zwischen den Formkörperteilen Verbindungen mit homogenem, nahtlosem Siliziumkarbid-Gefüge auf, was der Verbindung in vorteilhafter Weise eine hohe Festigkeit verleiht. Je nach Eindringtiefe des Siliziums entstehen vollständig aus Siliziumkarbid bestehende Formkörper oder Formkörper aus Graphit, deren Siliziumgehalt von der Oberfläche der Formkörper oder von den Verbindungsstellen her kontinuierlich bis auf den Siliziumgehalt des Grundwerkstoffes abnimmt.

In Ausgestaltung des Verfahrens nach Patentanspruch 2 wird nach Entnahme der Formkörper aus dem Schmelzbad im Vakuum oder in inerter Atmosphäre eine Nachbehandlung angechlossen, bei der in vorteilhafter weise auf der freien Oberfläche und in den offenen Poren der Formkörper noch anhaftendes Silizium verdampft, das nach Reaktion der Schmelze mit dem graphitischen Grundwerkstoff nicht zur Siliziumkarbidbildung geführt hat. Zweckmäßig wird für die Wärmebehandlung eine Temperatur bis zu maximal 2000°C eingestellt (Patentanspruch 3).

Zur Beseitigung des Siliziums, das nach Silizierung des Formkörpers auf dessen Oberfläche noch anhaftet, ist es neben der vorher erwähntend Erhitzung des Formkörpers im Vakuum oder in inerter Atmosphäre nach Patentanspruch 4 auch möglich, die Formkörper von anhaftenden Silizium mit einer Ätzlösung zu befreien. Als Ätzmittel eignen sich hierzu beispielsweise Flußsäure oder Natronlauge. Das Silizium läßt sich auch durch mechanische Bearbeitung entfernen.

Bevorzugt werden zur Ausbildung von aus Siliziumkarbid bestehenden Formkörpern in Patentanspruch 5 angegebene Werkstoffe mit einer Dichte zwischen 0,8 und 1,2 g pro cm$^3$ verwendet. Die unteren Werte für die Dichte werden im wesentlichen bestimmte durch die für das Eintauchen der zusammengefügten Formkörper in die Schmelze erforderliche Werkstoffestigkeit. Bei Dichten der Werkstoffe oberhalb von 1,3 dringt die Siliziumschmelze in den Formkörper nur schwer ein. Die Starke der Siliziumkarbidschicht, die sich im Bereich der Verbindungsstellen zwischen den Formkörperteilen sowie von der freien Oberfläche der Formkörpers ausgehend bildet, ist von der Eintauchzeit der Formkörperteile im Schmelzbad abhängig.

Graphitische Formkörperteile, die den vorgenannten Anforderungen an Dichte, offener Porosität und Gaspermeabilität des Werkstoffes genügen, werden bevorzugt nach Verfahren hergestellt, wie sie aus DE—C 2 133 044 sowie DE—C 2 360 982 bekannt sind. Danach werden Formkörper aus in Formen verfüllbaren Schlämmen oder aus Pulvern von mit Bindern überzogenen Füllkörnern aus gemahlenem Koks, Elektrographit, Naturgrphit, Ruß, und/oder aus ähnlichen Werkstoffen gebildet, Als Bindemittel werden Kunstharze, wie Phenolformaldehydharz, Pech, Teer oder dergleichen verwendet. Derartige Herstellungsverfahren für solche als Ausgangsmaterial verwendeten Schlämme oder Pulver sind beispielsweise in DE—C 2 040 252, DE—C 2 132 492, DE—C 2 712 628, DE—C 2 746 020 beschrieben. Bei diesen Verfahren werden die Füllerkörner in einer Lösung des Bindemittels vorzugsweise in einer alkalischen Lösung von Phenolformaldehydharz aufgeschlämmt und anschließend unter Zugabe von Angesäuertem Wasser als Abscheidungsflüssigkeit gegebenenfalls mittels einer Mischdüse mit dem sich dabei ausscheidenden Binder gleichmäßig überzogen. Die auf diese Weise hergestellten Schlämme oder nach Dekantieren oder Trocknen gebildeten Pulver lassen sich nach Einfüllen in Formen ohne oder unter geringer Druckanwendung verfestigen, wobei die mit Binder überzogenen Pulver gebunden werden.

Die Erfindung wird im Folgenden anhand von Ausführungsbeispielen näher erläutet. Die Zeichnung zeigt:

Figur 1 Teilschnitt durch eine aus Formteilen aus Graphit gefertigtes Schaufelrad

Figur 2 Teilstück eines aus Formteilen aus Graphit gefertigten Wärmetauschers.

### Ausführungsbeispiel 1

Aus einer Pulvermasse, die aus mit Phenolformaldehydharz umhüllten Elektrographit-Füllerkörnern gebildet worden war, deren Hauptkornfraktion im Kornbereich zwischen 60 μm und 100 μm lag, wurde in einem Formkasten unter leichtem Druck durch Einwirken von Methanoldampf nach dem in der DE—C 2 360 982 beschriebenen Verfahren bei 70°C im Vakuumrockenschrank eine Platte hergestellt. Das nach diesem Verfahrensschritt im graphitischen Werkstoff noch vorhandene, als Binder der Elektrographit-Füllkörner verwendete, Phenolformaldehydharz wurde durch Aufheizen der Platte auf 800°C unter Inertgasatmosphäre verkokt. Anschließend wurde die Platte auf etwa 1500°C erhitzt und in inerter Atmosphäre abgekühlt.

Die so gebildete Graphitplatte wies eine Dichte von 0,83 g/cm$^3$, eine Gesamtporosität von 63,4% und ein Verhältnis von offener zur Gesamtporosität von 0,9 auf. Für die Gaspermeabilität wurde bei einem aus dem Werkstoff der Graphitplatte gefertigten Zylinder von 1 cm$^2$ Querschnitt und 1 cm Länge bei einer Druckdifferenz über die Länge des Zylinders von 1 cm Wassersäule ein Luftdurchsatz von 2,7 cm$^3$ pro Minute ermittelt.

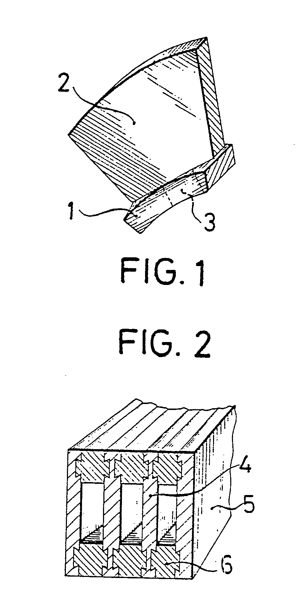

Aus der Graphitplatte wurden zur Herstellung eines in Figur 1 dargestellten Schaufelrades ein Schaufelträger 1 sowie sechs Schaufeln 2 herausgearbeitet. Die Schaufelträger wurden mit sechs Ansnehmungen mit Gewinde versehen, in welche die Füße 3 der Schaufeln 3 einschraubbar waren. Nach Montage der Schaufeln 2 auf dem Schaufelträger 1 wurde das Schaufenrad in ein unter Schutzgas stehendes Band aus geschmolzenem Siliziumkarbid ein- und untergetaucht. Nach 12 Minuten wurde das Schaufelrad nach Umwandlung des Kohlenstoffs in Siliziumkarbid dem Bade wieder entnommen.

Zum Abdampfen des überschüssigen Siliziums wurde das Schaufelrad 30 Minuten lang auf 1800°C in Schutzgasatmosphäre erhitzt und in dieser Atmosphäre abgekühlt. Durch Auftrennen des so hergestellten Schaufelrades konnte festgestellt werden, daß der graphitische Grundwerkstoff der Einzelteile vollständig in Siliziumkarbid umgewandelt worden war. An den Verbindungsstellen zwischen den Füßen 3 der Schaufeln 2 in den Ausnehmungen des Schaufelträgers 1 waren anstelle der Spalte homogene Siliziumkarbid-Gefüge ausgebildet.

### Ausführungsbeispiel 2

Ein Pulvermasse aus mit Phennolformaldehyd umhüllten Füllkörnern aus kalziniertem Koks mit einer Hauptkornfraktion im Bereich von 60 µm bis 100 µm wurde in zwei Formkästen eingefüllt, von denen der eine zur Herstellung eines Schaufelträgers und der andere zur Herstellung von Schaufeln mit Steckfüßen vorgesehen war. Die Pulvermasse in den Formen wurde unter leichtem Druck unter der Einwirkung von Formaldehyddämpfen nach dem in der DE—A 2 360 982 beschriebenen Verfahren bei etwa 110°C in einem Vakuumtrockenschrank verfestigt. Nach dem Abkühlen und Entformen wurden die einzelnen Formteile zur Verkokung des Binderharzes auf etwa 800°C unter Schutzgasatmosphäre erhitzt und danach auf eine Temperatur von etwa 1500°C gebracht. Nach dem Abkühlen unter der Schutzgasatmosphäre hatte das material der Formkörper eine Dichte von 0,96 g/cm³, ein Porosität von 57,5%, wobei das Verhältnis von offener Porosität zur Gesamtporosität 0,87 betrug, und eine Gaspermabilität entsprechend einem Luftdurchsatz von 2,5 cm³ pro Minute durch einen dem Ausführungsbeispiel 1 entsprechenden Zylinder bei gleicher Druckdifferenz.

In einen Schaufelträger wurden sechs Bohrungen zur Aufnahme von Steckfüßen der Schaufeln eingebracht und die Schaufeln mit ihren Füßen in diese Löcher hineingestreckt. Das aus diese Weise erhaltene Schaufelrad aus Kohlenstoffmaterial wurde nun zur Silizierung in das im Ausführungsbeispiel 1 beschriebene Siliziumbad unter Schutzgasatmosphäre ein- und untergetaucht. Nach 10 Minuten wurde das Schaufelrad dem Bad entnommen, abgekühlt und das an der Oberfläche anhaftende Silizium durch Kochen in einer 10 Gew.-%igen Natronlauge entfernt, danach mit Wasser gespült und getrocknet.

Bei Auftrennen des hergestellten Schaufelrades konnte festgestellt werden, daß sich an den Verbindungsstellen anstelle der Spalte homogene Siliziumkarbid-Gefüge ausgebildet hatten.

### Ausführungsbeispiel 3

Eine Pulvermasse aus mit Phenolformaldehydharz umhüllten Elektrographit-Füllerkörnern wurde in einen zur Herstellung einer Graphitplatte von 2 mm Dicke geeigneten Formkasten eingefüllt. Bei Herstellung der Graphitplatte wurde entsprechend dem in Ausführungsbeispiel 1 beschriebenen Verfahren vorgegangen.

Die Dichte der dünnen Platte betrug 1,0 g/cm³ ihre offene Porosität 56%. Für die Gaspermeabilität wurde ein Luftdurchsatz an einem entsprechend dem Ausführungsbeispiel 1 ausgebildeten Zylinder bei gleicher Druckdifferenz von 3,0 cm³ pro Minute ermittelt.

Aus der Platte wurden verschiedene Segmente 4, 5 und 6 geschnitten, wie sie z.B. für den Bau von Kompaktwärmetauschern verwendet werden. Diese Segmente würden durch Einschieben in entsprechend vorgesehene Nuten zu einem in Figur 2 schematisch gezeigten Formkörper zusammengesetzt, der anschließend entsprechend dem Ausführungsbeispiel 1 siliziert und 2 Stunden im Vakuum zur Entfernung des überschüssigen Siliziums bei etwa 1600°C geglüht wurde. Danach wurde der Körper in inerter Atmosphäre abgekühlt. An den Verbindungsstellen hatte sich ein gleichmäßiges Gefüge aus Siliziumkarbid gebildet, so daß die Nahtstellen nicht mehr erkennbar waren.

### Ausführungsbeispiel 4

Ein Pulvermasse aus mit Phenolformaldehydharz umhüllten Elektrographit-Füllerkörnern wurde in einen zylindrischen Formkästen eingefüllt, der in der Mitte einen Stab enthielt. Mit einem ringförmigen Stempel wurden aus der Pulvermasse entsprechend dem Ausführungsbeispiel 1 zwei Rohrstücke aus Graphit hergestellt. Die beiden Rohrstücke wurden mittels entsprechend eingearbeiteter Gewinde miteinander verschraubt.

Das Verbundrohrstück wurde entsprechend dem Ausführungsbeispiel 1 in Siliziumkarbid umgewandelt. Das an den Wandungen des Rohrstückes innen und außen noch anhaftende überschüssige Silizium wurde mechanisch durch Abschleifen des Siliziums entfernt. Die Nahtstelle im Verbundrohrstück war nach dem Silizieren Nicht mehr erkennbar und bestand aus einem homogenen Siliziumkarbidgefüge.

### Patentansprüche

1. Verfahren zum Herstellen von Formkörpern aus Siliziumkarbid oder Formkörpern aus Graphit oder aus graphitähnlichem Werkstoff mit einer aus Siliziumkarbid bestehenden Oberfläche durch Verbinden vorgefertigter Formkörperteile mittels einer zwischen den miteinander zu verbindenden Formkörperteilen gebildeten Siliziumkarbidschicht durch Eindringen geschmolzenen Siliziums in den Werkstoff der Formkörperteile, dadurch gekennzeichnet, daß in der dem zu bildenden Formkörper entsprechenden Form aneinandergefügte Formkörperteile aus einem Graphit oder graphitähnlichen Werkstoff mit einer Dichte zwischen 0,6 bis 1,3 g/cm³, einer offenen Porosität von 30 % bis 70 % sowie einer Gaspermeabilität, deren Größe vom Durchtritt einer Luftmenge von 1 bis 8 cm³/min durch einem 1 cm langen Zylinder von 1 cm² Querschnitt aus dem Graphit oder graphitähnlichen Werkstoff bei einer Druckdifferenz über die Länge des Zylinders von 1 cm Wassersäule bestimmt ist, in chemisch inerter Atmosphäre in eine Siliziumschmelze eingetaucht werden und daß der nach Eindringen der Siliziumschmelze in Fugen zwischen aneinanderstoßenden Flächen der Formkörperteile und nach Reaktion der Siliziumschmelze mit dem Graphit oder graphitähnlichen Werkstoff unter Ausbildung von Siliziumkarbid entstehende Formkörper der Siliziumschmelze entnommen und in inerter Atmosphäre gekühlt wird.

2. Verfahren nach Anspruch 1, dadurch gekennzeichnet, daß der Formkörper nach Entnahme aus der Siliziumschmelze im Vakuum oder in chemisch inerter Atmosphäre auf eine Temperatur erhitzt wird, bei der nach der Reaktion zwischen Siliziumschmelze und Graphit oder graphitähnlichem Werkstoff verbleibendes überschüssiges Silizium von der freien Oberfläche und aus den offenen Poren des Formkörpers verdampft.

3. Verfahren nach Anspruch 2, dadurch gekennzeichnet, daß der Formkörper auf eine maximal 2000°C betragende Temperatur erhitzt und getempert wird.

4. Verfahren nach Anspruch 1, dadurch gekennzeichnet, daß der nach Entnahme aus der Siliziumschmelze in inerter Atmosphäre gekühlte Formkörper in eine Ätzlösung getaucht wird, in der nach der Reaktion zwischen Siliziumschmelze und Graphit oder graphitähnlichen Werkstoff aus der Oberfläche des Formkörpers anhaftendes, überschüssiges Silizium gelöst wird.

5. Verfahren nach Patentanspruch 1, dadurch gekennzeichnet, daß die Formkörperteile eine Dichte zwischen 0,8 bis 1,2 g pro cm³ aufweisen.

6. Verfahren nach Patentanspruch 1 oder 5, dadurch gekennzeichnet, daß aus mit einem verkokbaren Binder, gleichmäßig umhüllten Graphit-, Kunstgraphit-, Ruß-, Koksteilchen und/oder aus ähnlichen Werkstoffen bestehenden Teilchen gebildete und im Anschluß daran verkokte Formkörperteile verwendet werden.

## Revendications

1. Procédé de préparation de corps façonnés en carbure de silicium ou de corps façonnés en graphite ou en matériau semblable au graphite ayant une surface en carbure de silicium, par liaison de parties de corps façonnés préparées à l'avance, au moyen d'une couche de carbure de silicium formée entre les parties de corps façonnés à relier les unes aux autres, par introduction de silicium fondu dans le matériau des parties de corps façonnés, caractérisé en ce qu'il consiste à immerger dans du silicium fondu en atmosphère chimique inerte, des parties de corps façonnés assemblées à la forme correspondant au corps à former, et constituées de graphite ou de matériau semblable au graphite ayant une masse volumique comprise entre 0,6 et 1,3 g/cm³, une porosité ouverte de 30 % à 70 %, ainsi qu'une perméabilité au gaz dont la valeur est déterminée par le passage d'une quantité d'air de 1 à 8 cm³/minute, dans un cylindre de 1 cm de long et de 1 cm² de section droite en graphite ou en matériau semblable à du graphite, pour une différence de pression sur la longueur du cylindre correspondant à une colonne d'eau de 1 cm, et, après la pénétration du silicium fondu dans les joints entre les surfaces contiguës des parties de corps façonnés et après réaction du silicium fondu sur le graphite ou sur le matériau semblable au graphite avec formation de carbure de silicium, à enlever du silicium fondu le corps façonné formé et à le refroidir en atmosphère inerte.

2. Procédé suivant la revendication 1, caractérisé en ce qu'il consiste à porter le corps façonné après l'avoir enlevé du silicium fondu, sous vide ou en atmosphère chimique inerte, à une température à laquelle le silicium en excès subsistant après la réaction entre le silicium fondu et le graphite ou le matériau semblable au graphite est évaporé de la surface libre et des pores ouverts du corps façonné.

3. Procédé suivant la revendication 2, caractérisé en ce qu'il consiste à chauffer et à recuire le corps façonnée à une température s'élevant au maximum à 2000°C.

4. Procédé suivant la revendication 1, caractérisé en ce qu'il consiste à immerger le corps façonné, refroidi en atmosphère inerte après l'avoir enlevé du silicium fondu, dans une solution de décapage dans laquelle le silicium en excès adhérant à la surface du corps façonné, après la réaction entre le silicium fondu et la graphite ou le matériau semblable au graphite, est dissous.

5. Procédé suivant la revendication 1, caractérisé en ce que les parties de corps façonnées ont une masse volumique comprise entre 0,8 et 1,2 g/cm³.

6. Procédé suivant la revendication 1 ou 5, caractérisé en ce qu'il consiste à utiliser des parties de corps façonnées formées de particules constituées de particules de graphite, de particules de graphite artificiel, de particules de suie, de particules de coke et/ou de particules en matériau semblable enrobées de manière uniforme d'un liant cokéfiable et cokéfiées ensuite.

## Claims

1. Method for the production of silicon carbide bodies or bodies made of graphite or a graphite-like material with a surface made of silicon carbide, by connecting prefabricated body parts by means of a silicon carbide layer formed between the body parts being connected together, by penetration of molten silicon into the material of the body parts, characterised in that body parts assembled together in the form corresponding to the body being produced and made of a graphite or a graphite-like material with a density of between 0.6 to 1.3 g/cm³, an open porosity of 30% to 70%, and a gas permeability the value of which is defined by passage of a quantity of air of 1 to 8 cm³/min through a cylinder 1 cm in length and of 1 cm² cross-section of the graphite or graphite-like material under a pressure difference over the length of the cylinder of 1 cm water column, are immersed into a silicon melt in a chemically inert atmosphere, and that the body obtained after penetration of the silicon melt into gaps between mutually abutting surfaces of the body parts and after reaction of the silicon melt with the graphite or graphite-like material with formation of silicon carbide, is taken from the silicon melt and cooled in an inert atmosphere.

2. Method according to claim 1, characterised in that the body is heated after being taken from the silicon melt in a vacuum or in a chemically inert atmosphere to a temperature at which excess silicon remaining after the reaction between silicon melt and graphite or graphite-like material is evaporated from the free surface and out of the open pores of the body.

3. Method according to claim 2, characterised in that the body is heated to a temperature of at the most 2000°C and tempered.

4. Method according to claim 1, characterised in that the body cooled in an inert atmosphere after removal from the silicon melt is dipped in an etching solution in which excess silicon adhering to the surface of the body after the reaction between silicon melt and graphite or graphite-like material is dissolved.

5. Method according to claim 1, characterised in that the body parts have a density of between 0.8 to 1.2 g per cm³.

6. Method according to claim 1 or 5, characterised in that the body parts are used which are formed of graphite particles, synthetic graphite particles, carbon black particles, coke particles, uniformly coated with a coking binding agent, and/or particles consisting of similar materials, and then coked.

FIG. 1

FIG. 2